# FASCICULE DE BREVET EUROPEEN

(11) **EP 3 147 162 B1**
(45) Date de publication et mention de la délivrance du brevet: **14.08.2019**
(21) Numéro de dépôt: 16190470.1
(22) Date de dépôt: 23.09.2016
(51) Int. Cl.: B60R 16/03, B60P 3/00, B60Q 1/26, B62D 53/00, B60R 16/023, B60Q 1/00

(54) **FEU ARRIÈRE DE VÉHICULE ET SYSTÈME DE COMMANDE D'UN ACCESSOIRE D'UN VÉHICULE**
RÜCKLICHT EINES FAHRZEUGS UND STEUERSYSTEM EINES ZUBEHÖRTEILS EINES FAHRZEUGS
REAR LIGHT OF VEHICLE AND SYSTEM FOR CONTROLLING A VEHICLE ACCESSORY

(30) Priorité: 24.09.2015 FR 1559011
(43) Date de publication de la demande: 29.03.2017
(73) Titulaire: Vignal Systems, 69960 Corbas (FR)
(72) Inventeur: DUPUIS, Guillaume, 42530 ST GENEST LERPT (FR)
(74) Mandataire: Delorme, Nicolas

(56) Documents cités:
- EP-A1- 2 744 064
- WO-A1-01/98107
- WO-A1-2012/143640
- FR-A1- 2 635 304
- FR-A1- 2 959 972
- US-A1- 2013 322 106

## Description

La présente invention concerne un feu arrière de véhicule, un système de commande d'un accessoire d'un véhicule, et un véhicule comportant un tel feu arrière ou un tel système de commande. L'invention concerne également un procédé de commande d'un accessoire d'un véhicule au moyen d'un tel feu arrière.

Certains véhicules sont équipés d'accessoires qui peuvent être actionnés localement par une personne agissant sur un organe de commande tel qu'un bouton, ou qui peuvent être commandés directement depuis la cabine. En particulier, les véhicules lourds tels que les camions peuvent être équipés d'accessoires tels qu'un haillon élévateur ou un feu de travail, par exemple.

L'actionnement de façon locale de l'accessoire peut s'avérer contraignant, car il nécessite la présence d'un opérateur au niveau de l'organe de commande, potentiellement pendant tout le temps où l'accessoire est actif. L'opérateur ne peut donc pas accomplir d'autres actions pendant cette durée.

Quant à la commande de l'accessoire directement depuis la cabine, elle n'est pas toujours possible. En effet, la communication entre la cabine et l'accessoire via une liaison existante impliquerait l'utilisation d'un support de communication multiplexé, du type bus CAN ou bus Lin, qui équipe aujourd'hui un grand nombre de véhicules lourds. Mais la plupart des accessoires ne sont pas configurés pour être reliés à un tel support de communication multiplexé ni pour comprendre les données transmises par celui-ci. Ainsi, la commande de l'accessoire directement depuis la cabine nécessiterait la mise en place d'une liaison entre la cabine et l'accessoire, qui le plus souvent n'existe pas. Or, la multiplication des câbles n'est pas souhaitable pour des raisons de coût et de difficultés pratiques d'implémentation.

Le document US 2013/0322106 décrit un feu de véhicule comportant un dispositif vibrant destiné à générer une alarme sonore.

La présente invention vise à remédier aux inconvénients mentionnés ci-dessus.

A cet effet, et selon un premier aspect, l'invention concerne un feu arrière de véhicule conforme à la revendication 1.

Ainsi, le feu arrière selon l'invention n'est pas uniquement un dispositif de signalisation lumineuse, mais remplit également une fonction d'organe de commande intermédiaire permettant la commande de l'accessoire.

En pratique, un faisceau de câbles du véhicule est relié au feu arrière du côté amont, par exemple via un connecteur possédant des broches reliées chacune à un conducteur du circuit électrique d'alimentation. L'unité de commande peut, typiquement via le faisceau, recevoir un certain nombre de données en fonction desquelles elle va pouvoir piloter la borne de sortie, donc l'accessoire raccordé à cette borne de sortie et alimenté par cette borne de sortie. Le feu arrière selon l'invention permet donc d'éviter de complexifier le réseau du véhicule et le câblage.

En pratique, le pilotage de la borne de sortie par l'unité de commande comprend notamment l'activation et /ou la désactivation de l'alimentation de la borne de sortie. A cet effet, l'unité de commande peut être connectée à la piste d'alimentation de la ou de chaque borne de sortie. L'unité de commande peut en outre être configurée pour permettre la mesure de la tension présente sur la ou chaque borne de sortie. Ceci peut être utile pour détecter un capteur, par exemple un capteur de porte.

L'invention présente de plus un grand nombre d'avantages liés à l'utilisation d'une piste pour l'alimentation de la borne de sortie depuis au moins l'un des premiers conducteurs. Par « piste », on entend une fine bande métallique à la surface de la carte électronique qui sert de liaison électrique, par opposition à une liaison par câble. En effet, l'utilisation d'une piste permet de gagner en compacité et d'assurer une protection contre les courts-circuits, par l'implémentation de dispositifs de protection correspondants.

En outre, contrairement à une liaison par câble, une telle configuration associant unité de commande et piste :
- permet - ou du moins permet de façon considérablement facilitée - l'intégration de fonctions plus ou moins complexes telles que la présence d'un interrupteur, la mise en place d'une temporisation, le couplage de fonction selon une logique combinatoire, etc. ;
- confère au feu arrière une certaine polyvalence, par la possibilité de programmer ou reprogrammer l'unité de commande selon les besoins de l'utilisateur, tandis qu'une configuration filaire est figée ;
- offre la possibilité de piloter l'accessoire en fonction d'une donnée transmise via un support de communication multiplexé, cette donnée pouvant être traitée par l'unité de commande, et utilisée par celle-ci ou transmise à l'accessoire sous une forme acceptable par ce dernier.

L'unité de commande peut en outre être connectée à chacun des premiers conducteurs ainsi qu'à chacune des sources lumineuses, de façon à pouvoir piloter les sources lumineuses et, dans certains modes de réalisation, détecter la défaillance d'une source lumineuse.

Selon une réalisation possible, la ou chaque piste d'alimentation comporte un interrupteur et l'unité de commande est connectée audit interrupteur de sorte à pouvoir piloter l'alimentation de la borne de sortie.

Le feu arrière peut en outre comprendre un dispositif de mesure de tension à la borne de sortie, ledit dispositif de mesure de tension étant connecté à l'unité de commande. Ainsi, l'unité de commande peut déterminer si une tension est appliquée sur la borne de sortie considérée. Comme indiqué précédemment, ceci peut être utile pour détecter un capteur.

La carte électronique peut comprendre un circuit convertisseur ayant une pluralité de noeuds d'entrée reliés chacun à l'un des premiers conducteurs et un noeud de sortie relié à chacune des sources lumineuses de sorte à leur délivrer une tension d'alimentation commune, la piste d'alimentation reliant la borne de sortie audit noeud de sortie du circuit convertisseur.

Le feu arrière peut comporter au moins deux bornes de sortie, de préférence au moins quatre bornes de sortie, chacune des bornes de sortie étant reliée par une piste d'alimentation dédiée à au moins l'un des premiers conducteurs - avec interposition du circuit convertisseur selon une réalisation possible.

En outre, selon une réalisation possible, le feu arrière comprend une borne additionnelle reliée à l'unité de commande, ladite borne additionnelle étant configurée pour pouvoir être connectée à un support de communication multiplexé tel qu'un bus CAN ou un bus Lin, l'unité de commande étant configurée pour pouvoir communiquer avec un tel support de communication multiplexé. Avec une telle disposition, on peut prévoir :
- un fonctionnement de base du feu arrière, qui commande l'accessoire uniquement en fonction de données qui ne sont pas transmises par le support de communication multiplexé. Dans ce cas, ce support sert uniquement à la reprogrammation éventuelle de l'unité de commande, si le besoin de l'utilisateur évolue. En effet, lorsque le feu arrière est prêt à être utilisé, il n'est pas démontable, et de plus la carte électronique est noyée dans une substance permettant de la protéger des agressions, en particulier de l'humidité, la reprogrammation de l'unité de commande n'étant donc possible que si cette unité de commande a été préalablement reliée à la borne additionnelle. Ce fonctionnement de base implique donc une communication ponctuelle avec le support de communication multiplexé, ne se produisant pas souvent au cours de la durée de vie du feu arrière ;
- un fonctionnement étendu du feu arrière, offrant davantage de possibilités de commande de l'accessoire, dans la mesure où l'unité de commande peut réaliser un pilotage en fonction de données transmises via le support de communication multiplexé, celles-ci étant potentiellement nombreuses. Dans ce cas, il n'est pas nécessaire de prévoir de câblage dédié pour l'accessoire, et l'accessoire peut être piloté selon des contions logiques complexes sur la base de données qu'il ne peut pas traiter lui-même. Ce fonctionnement étendu implique donc des échanges entre l'unité de commande et le support de communication multiplexé, se produisant couramment tout au long de la durée de vie du feu arrière.

Selon un deuxième aspect, l'invention concerne un système de commande d'un accessoire d'un véhicule. Ce système de commande comprend :
- un système de gestion du véhicule ;
- au moins un feu arrière tel que précédemment décrit ;
- un faisceau de câbles qui relie le système de gestion du véhicule au feu arrière et qui inclut une pluralité de premiers câbles connectés chacun à un premier conducteur dédié à une source lumineuse du feu arrière, et un deuxième câble, constituant un câble de masse, connecté au deuxième conducteur.

Le faisceau de câbles peut en outre comprendre un support de communication multiplexé, tel qu'un bus CAN ou un bus Lin, connecté à la borne additionnelle du feu arrière. Ainsi, comme exposé ci-dessus, il est possible d'envisager un fonctionnement de base du feu arrière - avec une simple reprogrammation possible de l'unité de commande - et/ou un fonctionnement étendu du feu arrière - impliquant des communications régulières entre le support de communication multiplexé et l'unité de commande.

Selon un troisième aspect, l'invention concerne un véhicule, en particulier véhicule lourd tel qu'un camion tracteur ou porteur comprenant (i) à l'avant, une partie motrice comportant une cabine et (ii) à l'arrière, un conteneur destiné à recevoir des marchandises. Ce véhicule comprend au moins un feu arrière tel que précédemment décrit, ou un système de commande tel que précédemment décrit, et au moins un accessoire relié à une borne de sortie du feu arrière.

En pratique, le feu arrière peut être monté à l'arrière du conteneur, et le système de gestion peut être situé dans la partie motrice, le faisceau s'étendant ainsi de la partie motrice jusqu'à l'arrière du véhicule.

Il est à noter que la partie motrice et le conteneur peuvent être des pièces séparées mais connectées mécaniquement et électriquement (comme dans le cas d'un tracteur où on attèle une semi-remorque à la partie motrice comprenant la cabine et un châssis), ou faire partie d'un même ensemble (comme dans le cas d'un porteur ayant un châssis commun pour la cabine et le conteneur).

L'accessoire appartient par exemple au groupe comprenant : un haillon élévateur, une porte, un dispositif d'éclairage tel qu'un feu de travail, une alarme sonore, une alarme visuelle, un capteur de distance (par exemple un capteur ultrason), un capteur d'ouverture de porte (par exemple de porte de conteneur frigorifique), un capteur de fin de course de haillon élévateur.

Selon un quatrième aspect, l'invention concerne un procédé de commande d'un accessoire d'un véhicule au moyen d'un feu arrière tel que précédemment décrit. Ce procédé de commande comprend l'activation et/ou la désactivation, par l'unité de commande, de l'alimentation de la borne de sortie à laquelle est relié l'accessoire, en fonction d'au moins une donnée reçue par ladite unité de commande. Il peut s'agir d'une activation, ou d'une désactivation, ou d'une succession d'activations et de désactivations, de façon par exemple à faire clignoter une source lumineuse.

Ladite donnée peut appartenir au groupe comprenant :
- l'état activé ou désactivé de l'alimentation d'une des sources lumineuses du feu arrière ;
- l'état activé ou désactivé de l'alimentation de la ou de l'une des bornes de sortie, ladite borne de sortie jouant ainsi le rôle d'une borne d'entrée pour l'unité de commande ;
- la valeur d'une tension d'alimentation par rapport à un seuil prédéterminé, ceci pouvant par exemple être représentatif de la charge de la batterie du véhicule, notamment dans le but d'éviter la décharge complète de la batterie ;
- la durée d'activation ou de désactivation d'une alimentation ;
- un paramètre de fonctionnement du véhicule apte à être détecté ou mesuré et transmis par le support de communication multiplexé, tel qu'une vitesse, une pression, une température, une tension.

De façon concrète, une situation opérationnelle du véhicule correspond à un ensemble de conditions logiques sur lesdites données reçues par ladite unité de commande, ensemble selon lequel l'unité de commande va piloter la borne de sortie, donc l'accessoire qui lui est relié.

Selon une réalisation possible, le procédé de commande comprend l'activation de l'alimentation de la borne de sortie à laquelle est relié l'accessoire pendant une durée prédéterminée et/ou jusqu'à la réception, par l'unité de commande, d'une donnée prédéterminée.

On décrit à présent, à titre d'exemples non limitatifs, plusieurs modes de réalisation possibles de l'invention, en référence aux figures annexées :
La figure 1 est une vue schématique en perspective, de dessous, d'un véhicule selon l'invention ;
La figure 2 est une représentation schématique d'un véhicule comportant un accessoire et un système de commande de cet accessoire au moyen d'un feu arrière du véhicule ;
La figure 3 est une vue schématique de l'intérieur d'un feu arrière selon l'invention ;
La figure 4 est une vue extérieure du feu arrière de la figure 3 ;
La figure 5 est une représentation schématique d'un feu arrière selon un premier mode de réalisation de l'invention ;
La figure 6 est une représentation schématique d'un feu arrière selon un deuxième mode de réalisation de l'invention.

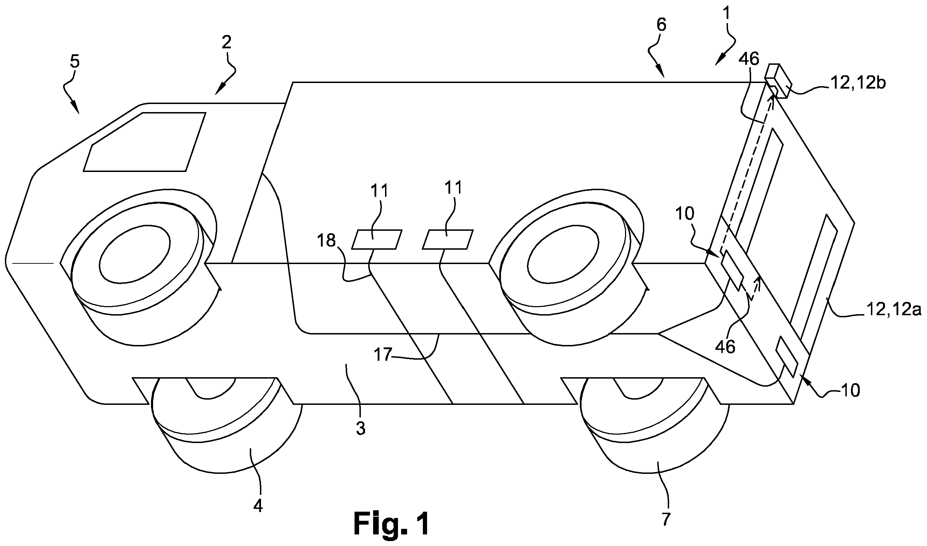

La figure 1 représente un véhicule 1 qui est ici un camion. Le véhicule 1 comprend, à l'avant, une partie motrice 2 pourvue d'un châssis 3, de roues avant 4 et d'une cabine 5. A l'arrière, le véhicule 1 comprend un conteneur 6 destiné à recevoir des marchandises, pourvu de roues arrière 7. Dans la réalisation représentée, le camion est un porteur, c'est-à-dire qu'il possède sur un seul et même châssis 3 la cabine 5 et le conteneur 6.

L'invention trouve néanmoins son application avec d'autres types de véhicules, et notamment de véhicules lourds. En particulier, l'invention s'applique également aux véhicules tracteurs, c'est-à-dire comprenant d'une part une partie motrice comportant la cabine et un châssis, et d'autre part un conteneur sous la forme d'une semi-remorque qui est chargée des marchandises et qui est attelée à la partie motrice. Dans ce cas, la semi-remorque est mécaniquement accrochée au châssis de la partie motrice, typiquement de façon articulée, et électriquement reliée à la partie motrice.

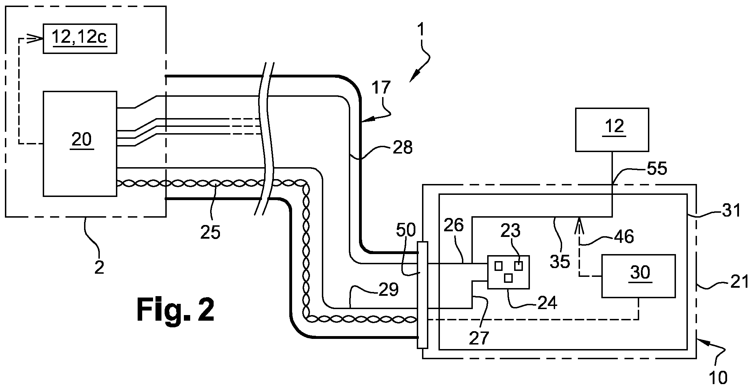

Le véhicule 1 comprend également au moins un accessoire 12. Dans la réalisation représentée à titre d'exemple, le véhicule 1 peut comprendre un ou plusieurs des accessoires suivants : un haillon élévateur 12a, un dispositif d'éclairage tel qu'un feu de travail 12b, une alarme 12c (voir figure 2) qui peut être sonore ou visuelle, et qui peut être située dans la cabine 5 pour pouvoir être perçue par le chauffeur du véhicule 1. Le véhicule 1 peut comporter d'autres accessoires non spécifiquement représentés sur les figures.

Une liaison électrique est prévue entre la partie motrice 2 et le conteneur 6, pour acheminer vers différents organes de signalisation du véhicule 1 les signaux de courant appropriés qui proviennent de la partie motrice 2. Ces signaux de courant peuvent servir à la fois à l'alimentation, à la commande et à la surveillance des différents organes de signalisation.

Les fonctions de signalisation réglementaires sur un conteneur de véhicule lourd peuvent comprendre : des feux arrière 10, des feux de position latéraux 11, ainsi que d'autres organes non représentés, comme : des feux d'encombrement avant, des feux d'encombrement arrière, une source lumineuse d'éclairage de la plaque d'immatriculation, etc.

La liaison électrique entre la partie motrice 2 et le conteneur 6 comprend un faisceau de câbles 17, pouvant être installé sous le plancher du conteneur 6, qui est relié, à l'avant, à la partie motrice et, à l'arrière, aux différentes fonctions de signalisation du véhicule 1 via d'éventuels câbles additionnels 18.

Dans le cas d'un véhicule tracteur (non représenté), la liaison électrique entre la partie motrice et la semi-remorque peut comprendre une ou plusieurs prises fixées sur la partie arrière de la partie motrice, et une ou plusieurs prises fixées sur la partie avant de la semi-remorque, ces prises étant reliées, par exemple au moyen d'un cordon extensible. Un faisceau de câbles, pouvant être installé sous le plancher de la semi-remorque, permet de relier les prises fixées sur la partie avant de la semi-remorque aux différentes fonctions de signalisation du véhicule via d'éventuels câbles additionnels.

Le véhicule 1 comprend de plus un système de gestion 20 qui permet de gérer de façon globale le fonctionnement de divers dispositifs du véhicule 1. Ce système de gestion 20, situé dans la partie motrice 2, est relié au faisceau 17 (voir figure 2).

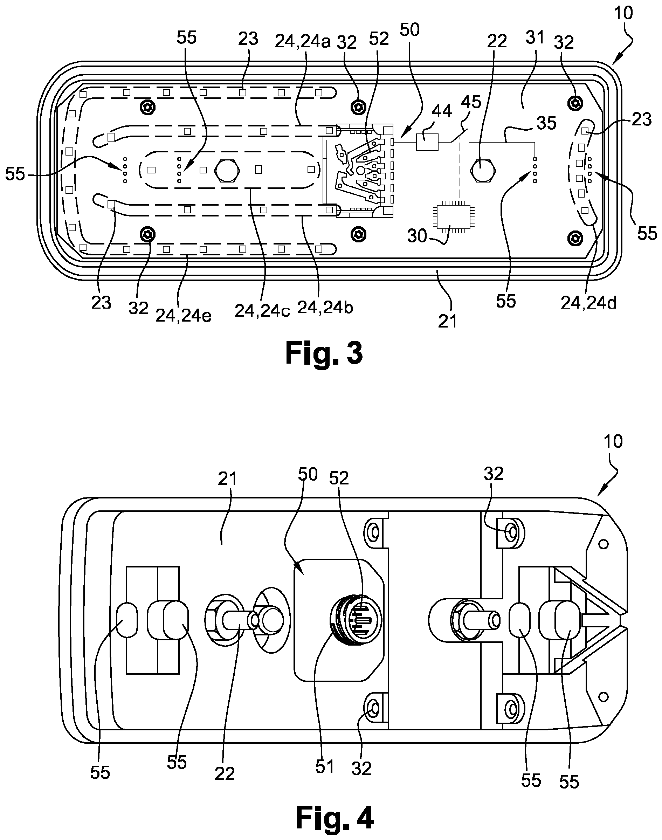

Comme illustré sur les figures 3 et 4, le feu arrière 10 comprend un boîtier 21, généralement en matière plastique, qui est fixé sur le véhicule 1 au moyen d'organes appropriés tels que des vis 22. Le feu arrière 10 comprend également une vitre (non représentée) assemblée au boîtier 21.

Dans le boîtier 21 sont disposées plusieurs sources lumineuses 23, pouvant typiquement être des LED (ou DEL, diode électroluminescente). Plus précisément, le boîtier 21 peut contenir plusieurs ensembles 24 de sources lumineuses 23, à savoir :
- un ensemble de LED (quatre par exemple) formant un feu stop 24a ;
- un ensemble de LED (quatre par exemple) formant un indicateur de direction 24b ;
- un ensemble de LED (quatre par exemple) formant un feu de recul 24c ;
- un ensemble de LED (six par exemple) formant un feu de brouillard 24d ;
- un ensemble de LED (dix-huit par exemple) formant un feu de position 24e.

Dans le boîtier du feu arrière 10 est logé un circuit électrique d'alimentation des sources lumineuses 23, comprenant des premiers conducteurs 26, qui constituent l'alimentation positive, et un deuxième conducteur 27, qui constitue un conducteur de masse. Chaque source lumineuse 23 - ou ensemble 24 de sources lumineuses formant une fonction de feu particulière - est montée entre un premier conducteur 26 dédié et le conducteur de masse 27.

Le faisceau 17 comprend des premiers câbles 28 connectés chacun à un premier conducteur 26 dédié à une source lumineuse 23 - ou un ensemble 24 de sources lumineuses - du feu arrière 10. Le faisceau 17 comprend de plus un deuxième câble 29 constituant un câble de masse connecté au conducteur de masse 27. Le faisceau 17 peut en outre comprendre un support de communication multiplexé 25, tel qu'un bus CAN ou un bus Lin.

La connexion entre les câbles 28, 29 et les conducteurs 26, 27 peut être réalisée au moyen d'un connecteur 50, qui peut être fixé sur le boîtier 21 comme on le voit sur les figures 3 et 4. Le connecteur 50 peut comporter, à l'extérieur du boîtier 21, un organe de liaison mécanique 51 avec le faisceau 17, par exemple sous la forme d'un manchon fileté. Le connecteur 50 comporte en outre des broches 52 qui, coté partie motrice 2, peuvent être reliées aux câbles 28, 29 du faisceau 17 lorsque ce dernier est assemblé au connecteur 50 et, à l'intérieur du boîtier 21 du feu arrière 10, peuvent être reliées aux câbles 26, 27.

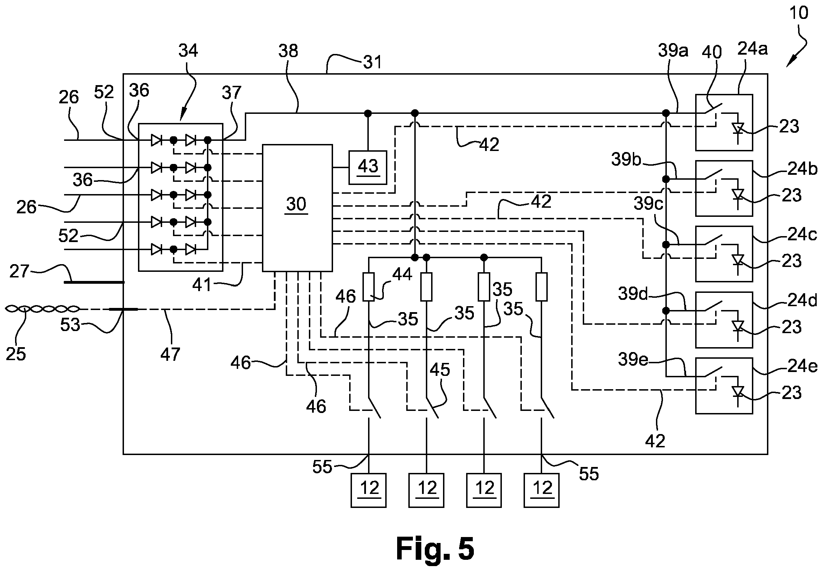

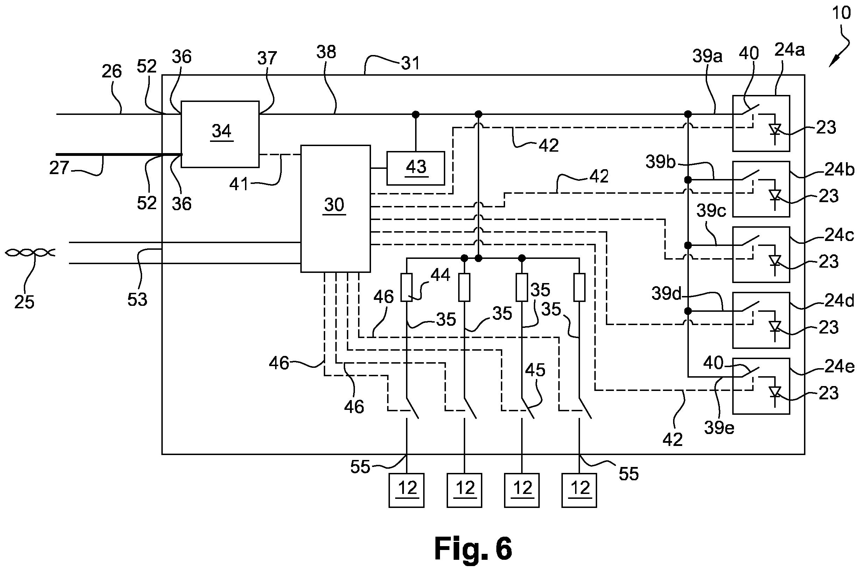

Le feu arrière 10 peut également comporter une borne additionnelle 53 (figures 5 et 6) reliée ni aux conducteurs 26, 27 ni aux câbles 28, 29, pouvant être utilisée pour une application correspondant à un autre besoin. La borne additionnelle 53 peut être agencée sur un connecteur distinct du connecteur 50.

Le feu arrière 10 comprend également au moins une borne de sortie 55, et quatre bornes de sortie dans les modes de réalisation représentés à titre d'exemple. Chaque borne de sortie 55 est destinée à être reliée à un accessoire 12 du véhicule 1. De façon concrète, une borne de sortie 55 peut comporter des broches accessibles depuis l'extérieur du boîtier 21 par un orifice ménagé dans une paroi - par exemple dans le fond - du boîtier 21, l'orifice étant entouré ou non d'une cheminée.

De plus, une carte électronique 31 est logée dans le boîtier 21. Dans la réalisation représentée, la carte électronique 31 se présente sous la forme d'une plaque fixée sur le fond du boîtier 21 sensiblement parallèlement à celui-ci, au moyen d'organes de fixation 32 tels que des vis. La carte électronique 31 peut occuper sensiblement toute la section du boîtier 21.

En pratique, la carte électronique 31 peut servir de support pour les sources lumineuses 23 et pour les conducteurs 26, 27, réalisés sous forme de pistes. De plus, chacune des bornes de sortie 55 est reliée par une piste d'alimentation 35 dédiée, incluse sur la carte électronique 31, à au moins l'un des premiers conducteurs 26. Chacune des bornes de sortie 55 est également reliée à la masse, ceci n'étant pas représenté.

La carte électronique 31 comprend en outre une unité de commande 30 qui permet de gérer un certain nombre de fonctionnalités du feu arrière 10, comme illustré schématiquement et partiellement sur la figure 3. En particulier, l'unité de commande 30 est configurée pour piloter la ou chaque borne de sortie 55 en fonction d'au moins une donnée reçue par ladite unité de commande 30.

On se réfère à présent aux figures 5 et 6 qui illustrent plus précisément une carte électronique 31 selon deux modes de réalisation de l'invention.

Sur ces figures, les traits pleins sont utilisés entre deux éléments qui sont reliés entre eux par une liaison physique (qu'il s'agisse d'un conducteur sous forme de câble, ou d'une piste) permettant en particulier l'alimentation électrique; les pointillés sont utilisés entre deux éléments qui sont connectés entre eux, c'est-à-dire fonctionnellement associés, pas nécessairement par une liaison filaire, mais par une liaison permettant la transmission d'informations ou le pilotage (liaison infrarouge, hertzienne, etc.).

Le circuit électrique d'alimentation des sources lumineuses peut comporter un circuit convertisseur 34 ayant une pluralité de noeuds d'entrée 36 reliés chacun à l'un des premiers conducteurs 26, typiquement via la broche 52 correspondante du connecteur 50. De plus, le circuit convertisseur 34 possède un noeud de sortie 37 relié à chacune des sources lumineuses 23, de sorte à leur délivrer une tension d'alimentation commune.

Le circuit convertisseur 34 permet ainsi, à partir des différentes tensions d'entrée, de fournir une unique tension de sortie, qui peut par exemple correspondre à la valeur minimale des tensions d'entrée non nulles. Ceci permet d'assurer, lorsque l'on souhaite allumer simultanément plusieurs sources lumineuses, qu'on a bien une tension d'alimentation suffisante pour que chacune de ces sources lumineuses soit allumée. De façon concrète, le circuit convertisseur 34 peut comporter des diodes.

Le noeud de sortie 37 est relié à un conducteur commun 38 puis à chaque source lumineuse 23 - ou ensemble 24a-24e de sources lumineuses - via une branche 39a-39e dédiée.

L'unité de commande 30 est apte à piloter l'activation ou la désactivation des sources lumineuses 23. A cet effet, l'unité de commande 30 peut être connectée :
- d'une part à chacun des premiers conducteurs 26, via une première connexion 41 dédiée à chacun des premiers conducteurs 26 ;
- et d'autre part à un interrupteur 40 agencé sur chacune des branches 39a-39e, via une deuxième liaison 42 dédiée à chacune des sources lumineuses 23.

Ainsi, chacune des sources lumineuses 23 est alimentée par le conducteur commun 38, mais l'interrupteur 40 correspondant est piloté par l'unité de commande 30 qui le place en position ouverte ou en position fermée selon qu'il existe ou non une tension sur le premier conducteur 26 correspondant, cette information étant reçue par l'unité de commande 30 via la première connexion 41. L'unité de commande 30 peut également être configurée pour mesurer l'état des sources lumineuses, c'est-à-dire pour détecter la défaillance d'une source lumineuse 23.

En outre, il peut être prévu un générateur de tension constante 43 reliant l'unité de commande 30 au conducteur commun 38, pour alimenter l'unité de commande 30 avec une tension appropriée, par exemple de 5 V.

De plus, la piste d'alimentation 35, qui relie une borne de sortie 55 à au moins l'un des premiers conducteurs 26, peut être reliée au noeud de sortie 37 du circuit convertisseur 34, par exemple en étant reliée au conducteur commun 38.

Chacune des pistes d'alimentation 35 peut comporter une résistance 44 - permettant une mesure du courant et une protection de la sortie correspondante contre un courant trop important - et un interrupteur 45. L'unité de commande 30 est connectée à chacun des interrupteurs 45 via une troisième liaison 46 dédiée à chacune des pistes d'alimentation 35. De la sorte, l'unité de commande 30 peut piloter chacune des bornes de sortie 55, c'est-à-dire l'accessoire 12 qui lui est relié, en ouvrant, en fermant, ou en ouvrant et fermant successivement l'interrupteur 45.

Il est à noter que, pour ce qui concerne les pistes d'alimentation 35, la représentation de la figure 3 est partielle et schématique.

L'interrupteur 45 peut intégrer une protection contre le court-circuit, et s'ouvrir pour protéger la borne de sortie 55 correspondante, sur la base de la mesure de courante faite au moyen de la résistance 44. L'unité de commande 30 détecte alors la présence du court-circuit via la troisième liaison 46. L'interrupteur 45 peut également intégrer une mesure de tension, pour détecter si une tension est appliquée sur la borne de sortie 55 correspondante. Cette information, permettant la détection d'un capteur, est transmise à l'unité de commande 30.

Ainsi, le feu arrière 10 peut commander un accessoire 12, par l'intermédiaire de l'unité de commande 30 qui est capable de recevoir des données, de les traiter et, en fonction de ces données, d'activer et/ou de désactiver l'alimentation de la borne de sortie 55 à laquelle est relié l'accessoire 12.

De façon concrète, l'unité de commande 30 est programmée pour piloter les bornes de sortie 55 d'une façon prédéterminée, sur la ligne de production, en fonction d'une donnée reçue ou d'un ensemble de conditions logiques sur plusieurs données reçues.

Les données reçues par l'unité de commande 30 peuvent comprendre :
- l'état activé ou désactivé de l'alimentation d'une des sources lumineuses 23 du feu arrière 10 ;
- l'état activé ou désactivé de l'alimentation de la ou de l'une des bornes de sortie 55 (la sortie devenant alors elle-même une entrée) ;
- la valeur d'une tension d'alimentation par rapport à un seuil prédéterminé ;
- la durée d'activation ou de désactivation d'une alimentation.

Cette programmation peut être figée.

Toutefois, il peut être souhaitable de pouvoir faire évoluer cette programmation, en fonction des besoins des utilisateurs. On peut ainsi prévoir une quatrième liaison 47 entre l'unité de commande 30 et la borne additionnelle 53, par exemple laissée en attente, comme illustré sur la figure 5. Lorsqu'apparaît le besoin de reprogrammer l'unité de commande 30, ceci peut être réalisé via le support de communication multiplexé 25, déjà relié à la borne additionnelle 53 ou que l'on vient relier à la borne additionnelle 53 laissée en attente. L'unité de commande 30, configurée pouvoir communiquer avec un tel support de communication multiplexé 25, peut ainsi être reprogrammée.

Selon le mode de réalisation illustré sur la figure 6, l'unité de commande 30 est en permanence connectée au support de communication multiplexé 25, de façon à pouvoir communiquer avec celui-ci et piloter l'accessoire en fonction de davantage de données. En effet, le support de communication multiplexé 25 peut fournir à l'unité de commande 30 de nombreuses données du véhicule 1, qui peuvent être envoyées au système de gestion 20 puis transférées via le support de communication multiplexé 25. Ainsi, ces données peuvent être tout paramètre de fonctionnement du véhicule apte à être détecté ou mesuré et transmis par le support de communication multiplexé 25, tel qu'une vitesse, une pression, une température, une tension.

On donne ci-après plusieurs exemples de pilotage d'une borne de sortie 55 par l'unité de commande 30.

### Exemple 1

### Sortie 1 = SI ((fonction position Actif) ET (Fonction Recul) ET (Tension Alimentation > 10 V))

De façon concrète, la borne de sortie 55 concernée peut être reliée à une source lumineuse 12b, et être activée si le feu de position 24e est allumé, et si le véhicule 1 recule ou va reculer (feu de feu de recul 24c allumé), et à condition que la batterie soit suffisamment chargée (ce qui correspond à la condition portant sur le seuil minimal de la tension d'alimentation).

### Exemple 2

### Sortie 2 = SI ((fonction stop Actif) ET (Tension Alimentation <10V))

Ceci peut correspondre au cas où le conducteur souhaite freiner ou arrêter le véhicule 1 mais où la batterie est déchargée, ou insuffisamment chargée. Dans ce cas, la sortie concernée peut être reliée à une alarme visuelle ou sonore 12c permettant d'avertir le conducteur de la situation.

### Exemple 3

### Sortie 3 = SI ((fonction position Actif) ET (Fonction Recul TEMPORISE 2min) ET PAS (Fonction position Stop))

Ces conditions logiques peuvent permettre d'allumer un feu 12b connecté à la sortie concernée, si le feu de position 24e est activé et que le feu de recul 24c est activé pendant au moins deux minutes. En outre, le feu 12b est éteint (c'est-à-dire la sortie désactivée) si le conducteur appuie sur la pédale de frein (c'est-à-dire si la fonction stop est activée).

### Exemple 4

### Sortie 3 = SI ((Entrée 1) ET (PAS (Entrée 2)) ET (fonction position Actif))

Dans ce cas, les sorties 1 et 2 sont utilisées comme des entrées et fournissent une donnée en fonction de laquelle la sortie 3 sera pilotée par l'unité de commande 30.

### Exemple 5

### Sortie 1 = SI ((vitesse véhicule > 50) ET (pression < 0,5))

Dans ce cas, tout ou partie des données provient du support de communication multiplexé 25.

### Exemple 6

### Sortie 1 = SI [(fonction position Actif) ET ((fonction indicateur Inactif depuis 1 seconde) ou (fonction indicateur Actif))]

Il s'agit de faire clignoter les feux de position latéraux lorsque le feu de position et l'indicateur de direction sont actifs simultanément.

Le feu arrière 10 selon l'invention n'est donc plus seulement un dispositif de signalisation lumineuse mais également dispositif de commande, et un noeud de communication entre le système de gestion du véhicule et un accessoire du véhicule.

Il va de soi que l'invention n'est pas limitée aux modes de réalisation décrits ci-dessus à titre d'exemples mais qu'elle comprend tous les équivalents techniques et les variantes des moyens décrits ainsi que leurs combinaisons.

## Revendications

1. Feu arrière de véhicule comprenant :
- un boîtier (21) ;
- une pluralité de sources lumineuses (23) disposées dans le boîtier (21) ;
- un circuit électrique d'alimentation des sources lumineuses (23) logé dans le boîtier (21) et destiné à être relié à un faisceau (17) de câbles du véhicule (1), ledit circuit électrique d'alimentation comprenant une pluralité de premiers conducteurs (26) dédiés chacun à l'une des sources lumineuses (23) et un deuxième conducteur (27) qui constitue un conducteur de masse ;
**caractérisé en ce qu'**il comprend en outre :
- au moins deux bornes de sortie (55), de préférence au moins quatre bornes de sortie, chaque borne de sortie étant agencée dans une paroi du boîtier (21), chaque borne de sortie (55) comprenant des broches qui sont configurées pour pouvoir être reliées à un accessoire (12, 12a, 12b, 12c) du véhicule (1), à l'extérieur du boîtier (21) ;
- une carte électronique (31) qui est logée dans le boîtier (21) et qui inclut :
- des pistes d'alimentation (35), une piste d'alimentation (35) dédiée à chacune des bornes de sortie (55) reliant les broches de ladite borne de sortie (55) à au moins l'un des premiers conducteurs (26), à l'intérieur du boîtier (21),
- et une unité de commande (30) configurée pour piloter chaque borne de sortie (55) en fonction d'au moins une donnée reçue par ladite unité de commande (30).

2. Feu arrière selon la revendication 2, **caractérisé en ce que** la piste d'alimentation (35) comporte un interrupteur (45) et **en ce que** l'unité de commande (30) est connectée audit interrupteur (45) de sorte à pouvoir piloter l'alimentation de la ou de chaque borne de sortie (55).

3. Feu arrière selon l'une des revendications 1 à 2, **caractérisé en ce qu'**il comprend un dispositif de mesure de tension à la ou chaque borne de sortie (55), ledit dispositif de mesure de tension étant connecté à l'unité de commande (30).

4. Feu arrière selon l'une des revendications 1 à 3, **caractérisé en ce que** la carte électronique (31) comprend un circuit convertisseur (34) ayant une pluralité de noeuds d'entrée (36) reliés chacun à l'un des premiers conducteurs (26) et un noeud de sortie (37) relié à chacune des sources lumineuses (23) de sorte à leur délivrer une tension d'alimentation commune, et **en ce que** la ou chaque piste d'alimentation (35) relie la borne de sortie (55) correspondante audit noeud de sortie (37) du circuit convertisseur (34).

5. Feu arrière selon l'une des revendications 1 à 4, **caractérisé en ce qu'**il comprend en outre une borne additionnelle (53) reliée à l'unité de commande (30), ladite borne additionnelle (53) étant configurée pour pouvoir être connectée à un support de communication multiplexé (25) tel qu'un bus CAN ou un bus Lin, et **en ce que** l'unité de commande (30) est configurée pour pouvoir communiquer avec un tel support de communication multiplexé (25).

6. Système de commande d'un accessoire (12, 12a, 12b, 12c) d'un véhicule (1), **caractérisé en ce qu'**il comprend :
- un système de gestion (20) du véhicule (1) ;
- au moins un feu arrière (10) selon l'une des revendications précédentes ;
- un faisceau (17) de câbles qui relie le système de gestion (20) du véhicule au feu arrière (10) et qui inclut une pluralité de premiers câbles (28) connectés chacun à un premier conducteur (26) dédié à une source lumineuse (23) du feu arrière (10), et un deuxième câble (29), constituant un câble de masse, connecté au deuxième conducteur (27).

7. Système de commande selon la revendication 6, **caractérisé en ce que** le feu arrière (10) est conforme à la revendication 5, et **en ce que** le faisceau (17) de câbles comprend un support de communication multiplexé (25), tel qu'un bus CAN ou un bus Lin, connecté à la borne additionnelle (53) du feu arrière (10).

8. Véhicule, en particulier véhicule lourd tel qu'un camion tracteur ou porteur comprenant (i) à l'avant, une partie motrice (2) comportant une cabine (5) et (ii) à l'arrière, un conteneur (6) destiné à recevoir des marchandises, **caractérisé en ce qu'**il comprend au moins un feu arrière (10) selon l'une des revendications 1 à 5 ou un système de commande selon la revendication 6 ou 7, et au moins un accessoire (12, 12a, 12b, 12c) relié à une borne de sortie (55) du feu arrière (10).

9. Véhicule selon la revendication 8, **caractérisé en ce que** l'accessoire (12) appartient au groupe comprenant : un haillon élévateur (12a), une porte, un dispositif d'éclairage tel qu'un feu de travail (12b), une alarme sonore, une alarme visuelle (12c), un capteur de distance, un capteur d'ouverture de porte, un capteur de fin de course de haillon élévateur.

10. Procédé de commande d'un accessoire (12) d'un véhicule (1) au moyen d'un feu arrière (10) selon l'une des revendications 1 à 5, **caractérisé en ce qu'**il comprend l'activation et/ou la désactivation, par l'unité de commande (30), de l'alimentation de la borne de sortie (55) à laquelle est relié l'accessoire (12), en fonction d'au moins une donnée reçue par ladite unité de commande (30).

11. Procédé de commande selon la revendication 11, **caractérisé en ce que** ladite donnée appartient au groupe comprenant :
- l'état activé ou désactivé de l'alimentation d'une des sources lumineuses (23) du feu arrière (10) ;
- l'état activé ou désactivé de l'alimentation de la ou de l'une des bornes de sortie (55) ;
- la valeur d'une tension d'alimentation par rapport à un seuil prédéterminé ;
- la durée d'activation ou de désactivation d'une alimentation ;
- lorsque le feu est conforme à la revendication 4, un paramètre de fonctionnement du véhicule (1) apte à être détecté ou mesuré et transmis par le support de communication multiplexé (25), tel qu'une vitesse, une pression, une température, une tension.

12. Procédé de commande selon la revendication 10 ou 11, **caractérisé en ce qu'**il comprend l'activation de l'alimentation de la borne de sortie (55) à laquelle est relié l'accessoire (12) pendant une durée prédéterminée et/ou jusqu'à la réception, par l'unité de commande (30), d'une donnée prédéterminée.

## Patentansprüche

1. Rückleuchte eines Fahrzeugs, umfassend:
- ein Gehäuse (21);
- eine Vielzahl von Lichtquellen (23), die in dem Gehäuse (21) angeordnet sind;
- ein Stromkreis zur Versorgung der Lichtquellen (23), der in dem Gehäuse (21) untergebracht und dazu bestimmt ist, mit einem Kabelstrang (17) des Fahrzeugs (1) verbunden zu werden, wobei der Stromkreis zur Versorgung eine Vielzahl von ersten Leitern (26), die jeweils einer der Lichtquellen (23) gewidmet sind, und einen zweiten Leiter (27) umfasst, der einen Masseleiter bildet;
**dadurch gekennzeichnet, dass** sie weiter umfasst:
- mindestens zwei Ausgangsklemmen (55), vorzugsweise mindestens vier Ausgangsklemmen, wobei jede Ausgangsklemme in einer Wand des Gehäuses (21) angeordnet ist, wobei jede Ausgangsklemme (55) Kontaktstifte umfasst, die ausgestaltet sind, mit einem Zubehör (12, 12a, 12b, 12c) des Fahrzeugs (1) außerhalb des Gehäuses (21) verbunden zu werden;
- eine elektronische Platine (31), die in dem Gehäuse (21) untergebracht ist und die beinhaltet:
- Versorgungsbahnen (35), wobei eine Versorgungsbahn (35), die jeder der Ausgangsklemmen (55) gewidmet ist, die Kontaktstifte der Ausgangsklemme (55) mit mindestens einem der ersten Leiter (26) innerhalb des Gehäuses (21) verbindet,
- und eine Steuereinheit (30), die ausgestaltet ist, jede Ausgangsklemme (55) in Abhängigkeit von mindestens einer Eingabe zu steuern, die von der Steuereinheit (30) empfangen wird.

2. Rückleuchte nach Anspruch 2, **dadurch gekennzeichnet, dass** die Versorgungsbahn (35) einen Schalter (45) aufweist und dadurch, dass die Steuereinheit (30) an den Schalter (45) angeschlossen ist, so dass die Versorgung der oder jeder Ausgangsklemme (55) gesteuert werden kann.

3. Rückleuchte nach einem der Ansprüche 1 bis 2, **dadurch gekennzeichnet, dass** sie eine Spannungsmessvorrichtung an der oder jeder Ausgangsklemme (55) umfasst, wobei die Spannungsmessvorrichtung an die Steuereinheit (30) angeschlossen ist.

4. Rückleuchte nach einem der Ansprüche 1 bis 3, **dadurch gekennzeichnet, dass** die elektronische Platine (31) eine Umrichterschaltung (34) umfasst, die eine Vielzahl von Eingangsknoten (36), die jeweils mit einem der ersten Leiter (26) verbunden sind, und einen Ausgangsknoten (37) hat, der mit jeder der Lichtquellen (23) verbunden ist, so dass ihnen eine gemeinsame Versorgungsspannung geliefert wird, und dadurch, dass die oder jede Versorgungsbahn (35) die entsprechende Ausgangsklemme (55) mit dem Ausgangsknoten (37) der Umrichterschaltung (34) verbindet.

5. Rückleuchte nach einem der Ansprüche 1 bis 4, **dadurch gekennzeichnet, dass** sie weiter eine zusätzliche Klemme (53) umfasst, die mit der Steuereinheit (30) verbunden ist, wobei die zusätzliche Klemme (53) ausgestaltet ist, an einen gemultiplexten Kommunikationsträger (25), wie etwa einen CAN-Bus oder einen LIN-Bus, angeschlossen werden zu können, und dadurch, dass die Steuereinheit (30) ausgestaltet ist, mit einem derartigen gemultiplexten Kommunikationsträger (25) kommunizieren zu können.

6. Steuersystem eines Zubehörs (12, 12a, 12b, 12c) eines Fahrzeugs (1), **dadurch gekennzeichnet, dass** es umfasst:
- ein Verwaltungssystem (20) des Fahrzeugs (1);
- mindestens eine Rückleuchte (10) nach einem der vorstehenden Ansprüche;
- einen Kabelstrang (17), der das Verwaltungssystem (20) des Fahrzeugs mit der Rückleuchte (10) verbindet und der eine Vielzahl von ersten Kabeln (28), die jeweils an einen ersten Leiter (26) angeschlossen sind, der einer Lichtquelle (23) der Rückleuchte (10) gewidmet ist, und ein zweites Kabel (29) beinhaltet, das ein Massekabel bildet und an den zweiten Leiter (27) angeschlossen ist.

7. Steuersystem nach Anspruch 6, **dadurch gekennzeichnet, dass** die Rückleuchte (10) gemäß dem Anspruch 5 ist, und dadurch, dass der Kabelstrang (17) einen gemultiplexten Kommunikationsträger (25) umfasst, wie etwa einen CAN-Bus oder einen LIN-Bus, der an die zusätzliche Klemme (53) der Rückleuchte (10) angeschlossen ist.

8. Fahrzeug, insbesondere ein Schwerfahrzeug, wie etwa ein Lastkraftwagen oder ein Sattelzug, umfassend (i) vorne einen Antriebsteil (2), der eine Fahrerkabine (5) aufweist, und (ii) hinten einen Aufbau (6), der dazu bestimmt ist, Ware aufzunehmen, **dadurch gekennzeichnet, dass** es mindestens eine Rückleuchte (10) nach einem der Ansprüche 1 bis 5 oder ein Steuersystem nach Anspruch 6 oder 7 und mindestens ein Zubehör (12, 12a, 12b, 12c) umfasst, das an eine Ausgangsklemme (55) der Rückleuchte (10) angeschlossen ist.

9. Fahrzeug nach Anspruch 8, **dadurch gekennzeichnet, dass** das Zubehör (12) zu der Gruppe gehört, umfassend: eine Hubladebühne (12a), eine Tür, eine Beleuchtungsvorrichtung, wie etwa ein Arbeitsscheinwerfer (12b), einen akustischen Alarm, einen optischen Alarm (12c), einen Abstandssensor, einen Türöffnungssensor, einen Endschaltersensor einer Hubladebühne.

10. Steuerverfahren eines Zubehörs (12) eines Fahrzeugs (1) mittels einer Rückleuchte (10) nach einem der Ansprüche 1 bis 5, **dadurch gekennzeichnet, dass** es das Einschalten und/oder das Ausschalten, durch die Steuereinheit (30), der Versorgung der Ausgangsklemme (55) umfasst, mit der das Zubehör (12) verbunden ist, in Abhängigkeit von mindestens einer Eingabe, die von der Steuereinheit (30) empfangen wird.

11. Steuerverfahren nach Anspruch 11, **dadurch gekennzeichnet, dass** die Eingabe zu der Gruppe gehört, umfassend:
- den eingeschalteten oder ausgeschalteten Zustand der Versorgung einer der Lichtquellen (23) der Rückleuchte (10);
- den eingeschalteten oder ausgeschalteten Zustand der Versorgung der oder einer der Ausgangsklemmen (55);
- den Wert einer Versorgungsspannung in Bezug auf einen vorbestimmten Grenzwert;
- die Einschalt- oder Ausschaltdauer einer Versorgung;
- wenn die Leuchte gemäß dem Anspruch 4 ist, einen Betriebsparameter des Fahrzeugs (1), der imstande ist, erfasst oder gemessen und von dem gemultiplexten Kommunikationsträger (25) übertragen zu werden, wie etwa eine Geschwindigkeit, einen Druck, eine Temperatur, eine Spannung.

12. Steuerverfahren nach Anspruch 10 oder 11, **dadurch gekennzeichnet, dass** es das Einschalten der Versorgung der Ausgangsklemme (55), mit der das Zubehör (12) verbunden ist, während einer vorbestimmten Dauer und/oder bis zu dem Empfang einer vorbestimmten Eingabe durch die Steuereinheit (30) umfasst.

## Claims

1. A vehicle rear lamp comprising:
- a casing (21);
- a plurality of light sources (23) disposed in the casing (21);
- an electrical power supply circuit of the light sources (23) housed in the casing (21) and intended to be linked to a bundle (17) of cables of the vehicle (1), said electrical power supply circuit comprising a plurality of first conductors (26) each dedicated to one of the light sources (23) and a second conductor (27) that constitutes a ground conductor;
**characterized in that** it further comprises:
- at least two output terminals (55), preferably at least four output terminals, each output terminal being arranged in a wall of the casing (21), each output terminal (55) comprising pins which are configured to be linked to an accessory (12,12a, 12b, 12c) of the vehicle (1), outside the casing (21);
- an electronic card (31) which is housed in the casing (21) and which includes:
- power supply tracks (35), one power supply track (35) dedicated to each of the output terminals (55) linking the pins of said output terminal (55) to at least one of the first conductors (26), inside the casing (21),
- and a control unit (30) configured to control each output terminal (55) depending on at least one data received by said control unit (30).

2. The rear lamp according to claim 2, **characterized in that** the power supply track (35) includes a switch (45) and **in that** the control unit (30) is connected to said switch (45) so as to be able to control the power supply of the or each output terminal (55).

3. The rear lamp according to any of claims 1 to 2, **characterized in that** it comprises a voltage measurement device at the or each output terminal (55), said voltage measurement device being connected to the control unit (30).

4. The rear lamp according to any of claims 1 to 3, **characterized in that** the electronic card (31) comprises a converter circuit (34) having a plurality of input nodes (36) each linked to one of the first conductors (26) and one output node (37) linked to each of the light sources (23) so as to provide them with a common power supply voltage, and **in that** the or each power supply track (35) links the corresponding output terminal (55) to said output node (37) of the converter circuit (34).

5. The rear lamp according to any of claims 1 to 4, **characterized in that** it further comprises an additional terminal (53) linked to the control unit (30), said additional terminal (53) being configured to be connected to a multiplexed communication medium (25) such as a CAN bus or a Lin bus, and **in that** the control unit (30) is configured to communicate with such a multiplexed communication medium (25).

6. A system for controlling an accessory (12, 12a, 12b, 12c) of a vehicle (1), **characterized in that** it comprises:
- a management system (20) of the vehicle (1);
- at least one rear lamp (10) according to any of the preceding claims;
- a bundle (17) of cables that links the management system (20) of the vehicle to the rear lamp (10) and that includes a plurality of first cables (28) each connected to a first conductor (26) dedicated to a light source (23) of the rear lamp (10), and a second cable (29), constituting a ground cable, connected to the second conductor (27).

7. The control system according to claim 6, **characterized in that** the rear lamp (10) is in accordance with claim 5, and **in that** the bundle (17) of cables comprises a multiplexed communication medium (25), such as a CAN bus or a Lin bus, connected to the additional terminal (53) of the rear lamp (10).

8. A vehicle, particularly a heavy-duty vehicle such as a tractor or straight truck comprising (i) at the front, a driving part (2) including a cabin (5) and (ii) at the rear, a container (6) intended to receive goods, **characterized in that** it comprises at least one rear lamp (10) according to any of claims 1 to 5 or a control system according to claim 6 or 7, and at least one accessory (12, 12a, 12b, 12c) linked to an output terminal (55) of the rear lamp (10).

9. The vehicle according to claim 8, **characterized in that** the accessory (12) belongs to the group comprising: a lifting tailgate (12a), a door, a lighting device such as a work light (12b), an audible alarm, a visual alarm (12c), a distance sensor, a door opening sensor, a lifting tailgate end-of-stroke sensor.

10. A method for controlling a vehicle (1) accessory (12) by means of a rear lamp (10) according to any of claims 1 to 5, **characterized in that** it comprises the activation and / or the deactivation, by the control unit (30), of the power supply of the output terminal (55) to which the accessory (12) is linked, depending on at least one data received by said control unit (30).

11. The control method according to claim 11, **characterized in that** said data belongs to the group comprising:
- the activated or deactivated state of the power supply of one of the light sources (23) of the rear lamp (10);
- the activated or deactivated state of the power supply of the or one of the output terminals (55);
- the value of a power supply voltage relative to a predetermined threshold;
- the duration of activation or deactivation of a power supply;
- when the lamp is in accordance with claim 4, an operation parameter of the vehicle (1) capable of being detected or measured and transmitted by the multiplexed communication medium (25), such as speed, pressure, temperature, voltage.

12. The control method according to claim 10 or 11, **characterized in that** it comprises the activation of the power supply of the output terminal (55) to which the accessory (12) is linked for a predetermined duration and / or until the control unit (30) receives a predetermined data.
